# EUROPEAN PATENT APPLICATION

(11) **EP 3 943 927 A1**
(43) Date of publication of application: **26.01.2022**
(21) Application number: 19920457.9
(22) Date of filing: 11.12.2019
(51) Int. Cl.: G01N 27/62

(54) **SAMPLE SUPPORT, IONIZATION METHOD, AND MASS SPECTROMETRY METHOD**

(30) Priority: 19.03.2019 JP 2019051232
(71) Applicant: Hamamatsu Photonics K.K., Hamamatsu-shi, Shizuoka 435-8558 (JP)
(72) Inventor: KOTANI Masahiro, Hamamatsu-shi, Shizuoka 435-8558 (JP); OHMURA Takayuki, Hamamatsu-shi, Shizuoka 435-8558 (JP); TASHIRO Akira, Hamamatsu-shi, Shizuoka 435-8558 (JP)
(74) Representative: Grünecker Patent- und Rechtsanwälte PartG mbB
(86) International application number: PCT/JP2019/048568
(87) International publication number: WO 2020/188916

(57) **Abstract**

The sample support is used for ionization of a sample contained in a sample solution dropped using a pipette tip. The sample support includes a substrate formed with a plurality of through holes opened in a first surface and a second surface, and a frame that is formed with a through hole penetrating in a thickness direction of the substrate so as to overlap a measurement region when viewed from the thickness direction and that is bonded to the first surface of the substrate. The through hole of the frame includes a narrow portion having a width smaller than the outer diameter of a tip of the pipette tip.

## Description

### Technical Field

The present disclosure relates to a sample support, an ionization method, and a mass spectrometry method.

### Background Art

Conventionally, a laser desorption ionization method is known as a method of ionizing a sample such as a biological sample for mass spectrometry or the like. As a sample support used in a laser desorption ionization method, Patent Document 1 discloses a sample support including a substrate in which a plurality of through holes are formed and a conductive layer provided on at least one surface of the substrate.

### Citation List

### Patent Document

[Patent Document 1] Japanese Patent No. 6093492

### Summary of Invention

### Technical Problem

As a measurement method using the sample support, there is a method in which a sample solution of a measurement target (ionization target) is dropped into a surface of the sample support on which a conductive layer is formed, and after the sample solution is dried, the surface is irradiated with an energy beam such as laser light. In this method, the dropping of the sample solution may be performed using a pipette tip. Here, in order to dry the sample solution in as short a time as possible, the dropping amount of the sample solution may be set to a very small amount (for example, 50 nL to 100 nL). In this case, it is necessary to bring the tip of the pipette tip as close to the measurement region as possible in order to reliably drop the sample solution into the measurement region (region for arranging the sample) of the sample support.

However, when the pipette tip is manually moved closer to the measurement region, the tip of the pipette tip may unintentionally contact the measurement region. Even when the above operation is mechanically performed, it is not easy to position the tip of the pipette tip with high accuracy. In particular, when a sample solution is simultaneously dropped into a plurality of measurement regions provided on a sample support by simultaneously operating a plurality of pipette tips, the height positions of the tips of the plurality of pipette tips are required to be aligned with high accuracy, but such control is not easy. As described above, even if the operation of dropping the sample solution using the pipette tip is performed manually or mechanically, the tip of the pipette tip may come into contact with the measurement region. Further, since the substrate constituting the sample support is a membrane-shaped thin film, if the tip of the pipette tip and the measurement region come into contact with each other, the substrate may be damaged in the measurement region.

Therefore, an object of the present disclosure is to provide a sample support, an ionization method, and a mass spectrometry method capable of preventing breakage of a substrate caused by contact between the substrate and a pipette tip.

### Solution to Problem

A sample support according to an aspect of the present disclosure is a sample support for ionization of a sample contained in a sample solution dropped using a pipette tip. The sample support includes: a substrate having a first surface and a second surface opposite to the first surface and having a plurality of first through holes opened in the first surface and the second surface; and a frame having a second through hole penetrating in a thickness direction of the substrate so as to overlap a measurement region of the substrate for ionizing a component of the sample when viewed from the thickness direction. The frame is bonded to the first surface of the substrate. The second through hole includes a narrow portion having a width smaller than an outer diameter of a tip of the pipette tip.

In the sample support, in a frame, a first through hole including a narrow portion having a width smaller than an outer diameter of a tip of a pipette tip for dropping a sample solution is formed in a portion overlapping a measurement region for ionizing a component of a sample in a substrate in which a plurality of second through holes are formed. Therefore, even if the tip of the pipette tip is moved closer to the first surface in order to drop the sample solution into the first surface of the measurement region, the tip of the pipette tip does not pass through the second through hole. That is, the narrow portion of the second through hole reliably prevents the tip of the pipette tip from penetrating the second through hole and contacting the first surface of the measurement region. Therefore, according to the sample support, it is possible to prevent the substrate from being damaged due to the contact between the substrate and the pipette tip.

The second through hole may be formed in a cylindrical shape having a width smaller than the outer diameter. Accordingly, the contact between the tip of the pipette tip and the first surface of the measurement region may be reliably prevented by the second through hole having a relatively simple shape.

The second through hole may be formed in a tapered shape in which an inner diameter decreases toward the first surface along the thickness direction, and an opening of the second through hole on a side opposite to the first surface side may have a size including the tip of the pipette tip when viewed from the thickness direction. Thus, the tip of the pipette tip can be easily introduced into the second through hole. That is, even if the position of the tip of the pipette tip is slightly shifted in the direction orthogonal to the thickness direction, the tip of the pipette tip can be guided into the second through hole. Further, since the tip of the pipette tip can be brought closer to the first surface of the measurement region, the sample solution can be suitably dropped into the measurement region.

The second through hole may have a cylindrical portion including the narrow portion, and a bowl-shaped portion connected to an end portion of the cylindrical portion opposite to the first surface side and having an inner diameter increasing with distance from the first surface along the thickness direction, and an opening of the bowl-shaped portion opposite to the cylindrical portion may have a size including the tip of the pipette tip when viewed from the thickness direction. Thus, the tip of the pipette tip can be easily introduced into the second through hole. That is, even if the position of the tip of the pipette tip is slightly shifted in the direction orthogonal to the thickness direction, the tip of the pipette tip can be introduced into the second through hole. Further, since the tip of the pipette tip can be brought closer to the first surface of the measurement region, the sample solution can be suitably dropped into the measurement region. Further, there is an advantage that such a second through hole can be formed by relatively easy processing such as etching.

The second through hole may further include an inner bowl-shaped portion connected to an end portion of the cylindrical portion on the first surface side and having an inner diameter increasing toward the first surface along the thickness direction. In this case, the area of the first surface exposed to the second through hole can be increased as compared with the case where the second through hole does not have the inner bowl-shaped portion. Accordingly, in the case where the frame and the first surface of the substrate are bonded to each other with an adhesive, even if the adhesive slightly drips to the measurement region side, ionization of the sample using the measurement region can be performed without any problem.

The sample support may further include an adhesive layer disposed between the frame and the first surface to adhere the frame to the first surface, and the frame may be formed with a recessed portion in which a portion of the adhesive layer is accommodated on a surface of the frame facing the adhesive layer in a vicinity of the second through hole. Accordingly, in the vicinity of the second through hole, that is, in the peripheral portion of the measurement region, the adhesive forming the adhesive layer can be released to the recessed portion, and thus it is possible to suppress the adhesive from dripping to the measurement region side. As a result, the sample ionization using the measurement region can be suitably performed.

The sample support may further include a magnetic substrate formed of a magnetic material and provided on the second surface of the substrate. For example, when the sample support is fixed in order to drop the sample solution onto the sample support, by using the mounting portion having magnetism, the magnetic substrate can be appropriately fixed to the mounting portion by the magnetic force acting between the magnetic substrate and the mounting portion.

The frame may be formed of a magnetic material, and the magnetic substrate may be fixed to the second surface of the substrate by a magnetic force between the frame and the magnetic substrate. If the magnetic substrate is bonded to the second surface of the substrate with an adhesive, not only the sample to be measured but also a component of the adhesive provided on the second surface of the measurement region may be ionized at the time of measurement (ionization of the sample dropped on the measurement region), and the measurement may not be appropriately performed. On the other hand, according to the above configuration, the above problem can be solved, and the magnetic substrate can be easily fixed to the substrate.

A peripheral portion of the frame and a peripheral portion of the magnetic substrate, which do not overlap the substrate when viewed from the thickness direction, may be bonded to each other. Accordingly, the frame provided on the first surface side of the substrate and the magnetic substrate provided on the second surface side of the substrate can be appropriately fixed.

The sample support may further include a conductive layer provided on the first surface so as not to block the first through hole. Thus, even when an insulating substrate is used, a voltage can be applied to the first surface side of the substrate via the conductive layer. Thus, after the sample solution is dropped into the first surface and the sample solution is dried, the first surface is irradiated with the energy beam while applying a voltage to the conductive layer, whereby the components of the sample can be favorably ionized.

A width of the first through hole may be 1 nm to 700 nm, and a width of the narrow portion of the second through hole may be 500 µm or less. Accordingly, the component of the sample contained in the sample solution dropped into the first surface of the substrate can be appropriately retained on the first surface side of the substrate. Further, by setting the width of the narrow portion to 500 µm or less, the width of the narrow portion can be reliably made smaller than the outer diameter of the tip of a general pipette tip.

A plurality of measurement regions may be formed in the substrate, and the frame may have a plurality of second through holes corresponding to the plurality of measurement regions. Accordingly, for example, by simultaneously operating a plurality of pipette tips, it is possible to simultaneously drop the sample solution to a plurality of measurement regions. As a result, the efficiency of measurement work can be improved.

A hydrophilic coating layer may be provided on an inner surface of the second through hole. Accordingly, the sample solution dropped from the tip of the pipette tip is easily transferred to the inner surface of the second through hole. As a result, the movement of the sample solution to the first surface side in the second through hole is promoted, and the sample solution can be moved to the first surface more smoothly.

According to an aspect of the present disclosure, there is provided an ionization method including: a first step of preparing the sample support; a second step of placing the sample support on a mounting surface of a mounting portion such that the second surface faces the mounting surface; a third step of bringing the tip of the pipette tip close to the second through hole from a side opposite to the first surface side of the frame and then dropping the sample solution from the tip of the pipette tip into the measurement region through the second through hole; and a fourth step of ionizing a component of the sample by irradiating the first surface of the measurement region with an energy beam after the sample solution dropped on the substrate is dried.

In the above ionization method, in the third step in which the sample solution is dropped, even if the tip of the pipette tip is moved closer to the first surface in order to drop the sample solution into the first surface of the measurement region, the tip of the pipette tip does not pass through the second through hole. That is, the narrow portion of the second through hole reliably prevents the tip of the pipette tip from penetrating the second through hole and contacting the first surface of the measurement region. Accordingly, it is possible to prevent the substrate from being damaged due to the contact between the substrate and the pipette tip.

The ionization method may include a step of performing a surface treatment for improving hydrophilicity on an inner surface of the second through hole before the third step. Accordingly, in the third process, the sample solution dropped from the tip of the pipette tip is easily transferred to the inner surface of the second through hole. As a result, the movement of the sample solution to the first surface side in the second through hole is promoted, and the sample solution can be moved to the first surface more smoothly.

Amass spectrometry method according to an aspect of the present disclosure includes each step of the above ionization method, and a fifth step of detecting the component ionized in the fourth step.

According to the mass spectrometry method, by including the respective steps of the above-described ionization method, the same effects as those of the above-described ionization method are exhibited.

### Advantageous Effects of Invention

According to the present disclosure, it is possible to provide a sample support, an ionization method, and a mass spectrometry method capable of preventing breakage of a substrate caused by contact between the substrate and a pipette tip.

### Brief Description of Drawings

FIG. 1 is a plan view of the sample support of the first embodiment.
FIG. 2 is a cross-sectional view of the sample support taken along line II-II shown in FIG. 1.
FIG. 3 is a cross-sectional view of the sample support taken along line III-III shown in FIG. 1.
FIG. 4 is a diagram showing an enlarged image of the substrate of the sample support shown in FIG. 1.
FIG. 5 is a cross-sectional view of a portion including a through hole of a frame.
FIG. 6 is a diagram showing a process of a mass spectrometry method using the sample support of the first embodiment.
FIG. 7 is a diagram showing a process of a mass spectrometry method using the sample support of the first embodiment.
FIG. 8 is a diagram showing a process of a mass spectrometry method using the sample support of the first embodiment.
FIG. 9 is a cross-sectional view showing (A) first modification and (B) second modification of the frame.
FIG. 10 is a cross-sectional view showing (A) third modification and (B) fourth modification of the frame.
FIG. 11 is a diagram showing a mass spectrometry result using the sample support according to the example.
FIG. 12 is a plan view of the sample support of the second embodiment.
FIG. 13 is a cross-sectional view of the sample support taken along line XIII-XIII shown in FIG. 12.

### Description of Embodiments

Hereinafter, embodiments of the present disclosure will be described with reference to the drawings. In the drawings, the same or corresponding portions are denoted by the same reference numerals, and redundant description will be omitted. In the drawings, some portions are exaggerated for easy understanding of characteristic portions according to the embodiments, and the dimensions may be different from actual dimensions. In the following description, terms such as "upper" and "lower" are used for convenience based on the state shown in the drawings.

### [First Embodiment]

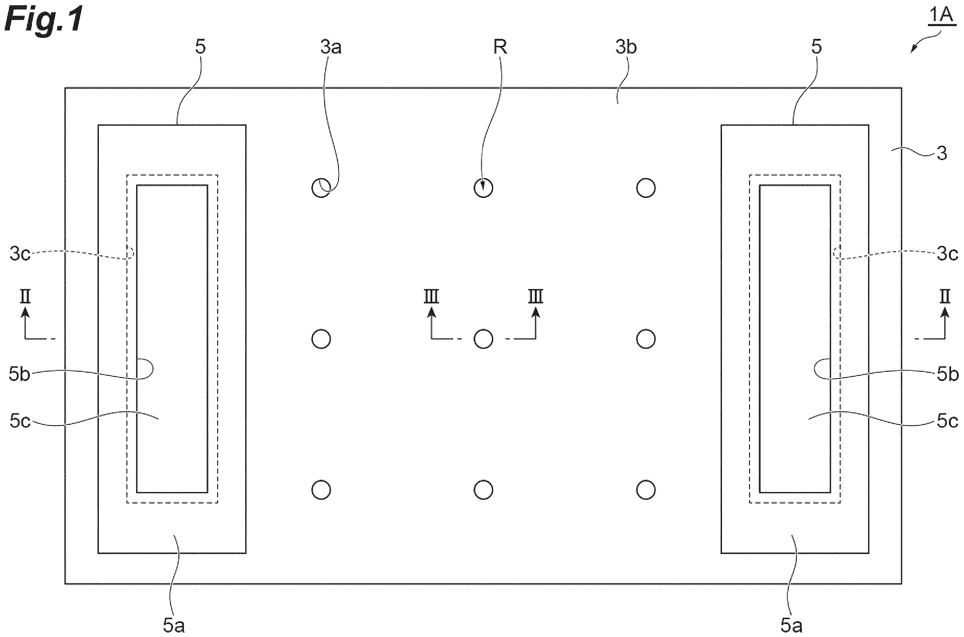

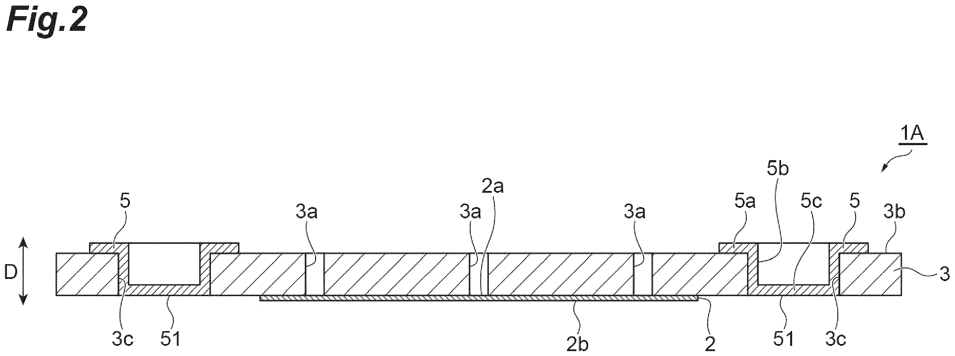

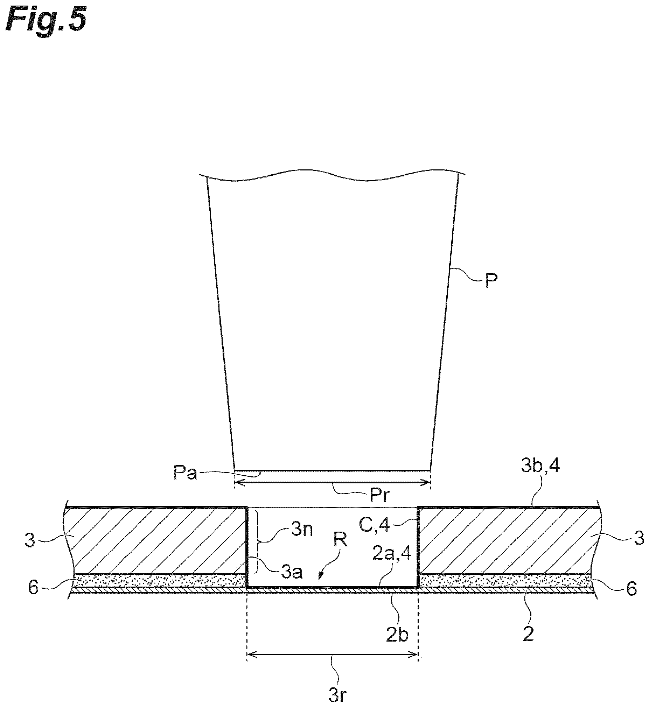

A sample support 1A according to the first embodiment will be described with reference to FIGS. 1 to 5. The sample support 1A is used for sample ionization. As shown in FIGS 1 to 3, the sample support 1A includes a substrate 2, a frame 3, a conductive layer 4, and a tape 5. In FIGS 1 and 2, the conductive layer 4 included in the sample support 1A is not illustrated. In FIG. 5, a portion where the conductive layer 4 is formed is indicated by a thick line.

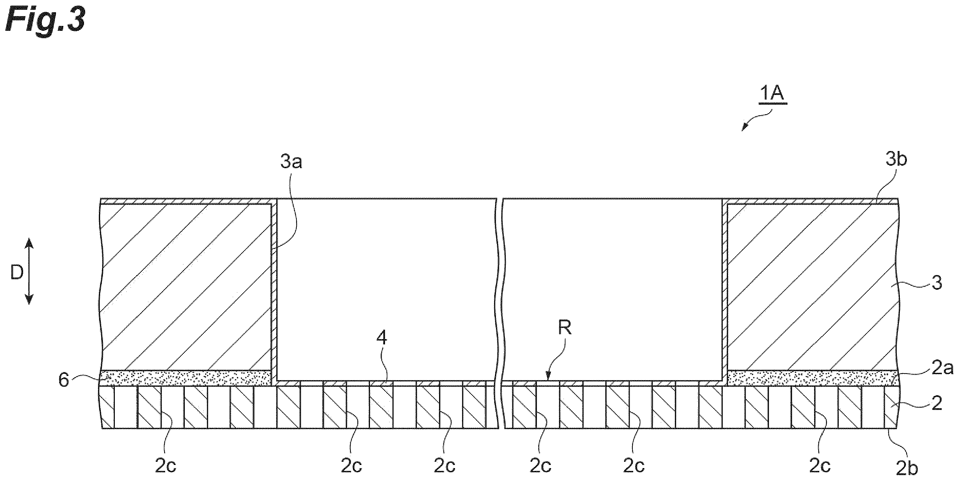

The substrate 2 has a first surface 2a and a second surface 2b opposite to the first surface 2a. As shown in FIG. 3, a plurality of through holes 2c (first through holes) are formed uniformly (in a uniform distribution) in the substrate 2. Each through hole 2c extends along the thickness direction D of the substrate 2 (the direction in which the first surface 2a and the second surface 2b face each other), and is open to the first surface 2a and the second surface 2b.

The substrate 2 is formed of, for example, an insulating material in a rectangular plate shape. The length of one side of the substrate 2 when viewed from the thickness direction D is, for example, about several cm. The thickness of the substrate 2 is, for example, about 1 µm to 50 µm. In the present embodiment, as an example, the thickness of the substrate 2 is about 5 µm. The shape of the through hole 2c when viewed from the thickness direction D is, for example, substantially circular. The width of the through hole 2c is, for example, about 1 nm to 700 nm.

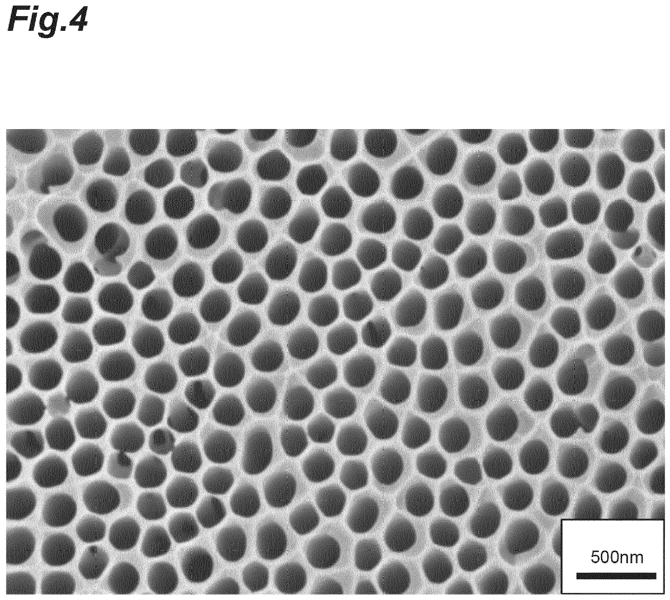

The width of the through hole 2c is a value obtained as follows. First, images of the first surface 2a and the second surface 2b of the substrate 2 are acquired. FIG. 4 shows an example of an SEM image of a part of the first surface 2a of the substrate 2. In the SEM image, black portions are through holes 2c, and white portions are partition wall portions between the through holes 2c. Subsequently, for example, a binarization process is performed on the acquired image of the first surface 2a to extract a plurality of pixel groups corresponding to a plurality of first openings (openings of the through holes 2c on the first surface 2a side) in the measurement region R, and a diameter of circle having an average area of the first openings are acquired based on size per a pixel. Similarly, by performing, for example, binarization processing on the acquired image of the second surface 2b to extract a plurality of pixel groups corresponding to a plurality of second openings (openings of the through holes 2c on the second surface 2b side) in the measurement region R, and a diameter of circle having an average area of the second openings are acquired based on size per a pixel. Then, an average value of the diameter of the circle acquired for the first surface 2a and the diameter of the circle acquired for the second surface 2b is acquired as the width of the through hole 2c.

As shown in FIG. 4, a plurality of through holes 2c having a substantially constant width are uniformly formed in the substrate 2. The substrate 2 shown in FIG. 4 is an alumina porous film formed by anodizing A1 (aluminum). For example, by anodizing the Al substrate, surface portion of the A1 substrate is oxidized, and a plurality of pores (portions to become through holes 2c) are formed in the surface portion of the Al substrate. Subsequently, the oxidized surface portion (anodized film) is peeled off from the Al substrate, and the peeled anodized film is subjected to a pore-widening treatment for widening the pores, thereby obtaining the above-described substrate 2. The substrate 2 may be formed by anodizing a valve metal other than Al, such as Ta (tantalum), Nb (niobium), Ti (titanium), Hf (hafnium), Zr (zirconium), Zn (zinc), W (tungsten), Bi (bismuth), or Sb (antimony), or may be formed by anodizing Si (silicon).

The frame 3 is provided on the first surface 2a of the substrate 2 and supports the substrate 2 on the first surface 2a side. As shown in FIG. 3, the frame 3 is bonded to the first surface 2a of the substrate 2 by adhesive layer 6. The material of the adhesive layer 6 is preferably, for example, an adhesive material (for example, low-melting-point glass, a vacuum adhesive, or the like) that releases less gas. In the present embodiment, when viewed from the thickness direction D, the frame 3 is formed in a rectangular plate shape larger than the substrate 2. The frame 3 is formed with a plurality of through holes 3a (second through holes) penetrating in a thickness direction of the frame 3 (i.e., a direction coinciding with the thickness direction D). As shown in FIG. 1, the plurality of through holes 3a are arranged in a lattice pattern, for example. In the present embodiment, when viewed from the thickness direction D, nine through holes 3a are arranged in 3 rows and 3 columns. A portion of the substrate 2 corresponding to the through hole 3a (that is, a portion overlapping the through hole 3a when viewed from the thickness direction D) functions as a measurement region R for performing sample ionization. That is, each measurement region R is defined by each through hole 3a provided in the frame 3. In other words, the frame 3 is formed so as to surround the measurement region R of the substrate 2 when viewed from the thickness direction D by having such a through hole 3a.

Each measurement region R is a region including a plurality of through holes 2c. The aperture ratio of the through holes 2c in the measurement region R (the ratio of the through holes 2c to the measurement region R when viewed from the thickness direction D) is practically 10 % to 80 %, and particularly preferably 60 % to 80 %. The through holes 2c may have different sizes, or the through holes 2c may be partially connected to each other.

The frame 3 is formed of, for example, a magnetic metal material (for example, a stainless steel material (SUS 400 series) or the like) in a rectangular plate shape. The length of one side of the frame 3 when viewed from the thickness direction D is, for example, about several cm to 200 cm, and the thickness of the frame 3 is, for example, 3 mm or less. In the present embodiment, as an example, the thickness of the frame 3 is 0.2 mm. The shape of the through holes 3a when viewed from the thickness direction D is, for example, circular, and the distance (pitch) between the centers of adjacent through holes 3a is, for example, about several mm to several 10 of mm. According to the frame 3, handling of the sample support 1A can be facilitated, and deformation of the substrate 2 due to a temperature change or the like is suppressed.

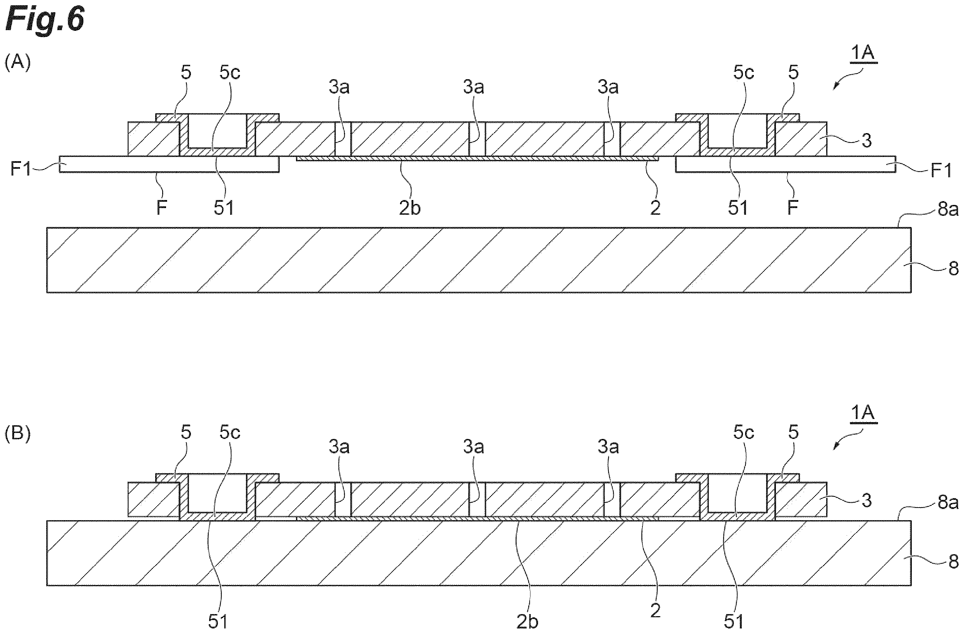

The tape 5 is a fixing member for fixing the sample support 1A to a mounting surface 8a (see FIG. 6) of the glass slide 8 (mounting portion) when measurement using the sample support 1A is performed. The tape 5 is formed of a conductive material. The tape 5 is, for example, a carbon tape. In the present embodiment, an opening part 3c penetrating in the thickness direction of the frame 3 is formed in a portion of the frame 3 not overlapping the substrate 2 when viewed from the thickness direction D. Specifically, as shown in FIGS. 1 and 2, a rectangular opening part 3c is formed at each of both edges of the frame 3 facing each other across the substrate 2 when viewed from the thickness direction D. The tape 5 is provided in each opening part 3c. In detail, the adhesive surface 51 of the tape 5 is adhered to the peripheral portion of the opening part 3c of the surface 3b of the frame 3, and the inner surface of the through hole 3a from the surface 3b side of the frame 3. That is, the tape 5 has a portion 5a along the peripheral portion, a portion 5b along the inner surface of the through hole 3a, and a portion 5c along the surface of the frame 3 on the substrate 2 side in the through hole 3a. Further, in the portion 5c, the adhesive surface 51 faces the side where the substrate 2 is located with respect to the frame 3. That is, the sample support 1A can be fixed to the mounting surface 8a by pressing the adhesive surface 51 in the portion 5c against the mounting surface 8a of the glass slide 8. In the present embodiment, as shown in FIG. 6, the sample support 1A has a film cover F that covers the adhesive surface 51 of the portion 5c in a state before measurement (for example, during distribution). The film cover F overlaps the portion 5c when viewed from the thickness direction D. Further, the film cover F has a protruding portion F1 protruding outward from both edges of the frame 3. Since the protruding portion F1 of the film cover F is held in a state before the measurement is performed, the sample support 1A can be stored in the storage case or carried.

The conductive layer 4 is provided on the first surface 2a of the substrate 2. As shown in FIG. 3, the conductive layer 4 is continuously (integrally) formed on a region of the first surface 2a of the substrate 2 corresponding to the through hole 3a of the frame 3 (that is, a region corresponding to the measurement region R), an inner surface of the through hole 3a, and the surface 3b of the frame 3. In the measurement region R, conductive layer 4 covers a portion of first surface 2a of substrate 2 where the through holes 2c are not formed. That is, the conductive layer 4 is provided so as not to block each through hole 2c. Therefore, in the measurement region R, each through hole 2c is exposed to the through hole 3a.

The conductive layer 4 is formed of a conductive material. In the present embodiment, the conductive layer 4 is formed of Pt (platinum) or Au (gold). As described above, as the material of the conductive layer 4, a metal having low affinity (reactivity) with the sample and high conductivity is preferably used for the following reason.

For example, when the conductive layer 4 is formed of metals such as Cu having high affinity with a sample such as proteins, the sample is ionized in a state in which Cu atom is attached to sample molecules in a process of sample ionization described later, and there is a concern that a detection result is deviated in mass spectrometry described later by the amount of attachment of Cu atom. Therefore, as the material of the conductive layer 4, a metal having low affinity with the sample is preferably used.

On the other hand, the higher the conductivity of a metal is, the easier it is to apply a constant voltage easily and stably. Therefore, when the conductive layer 4 is formed of a highly conductive metal, a voltage can be uniformly applied to the first surface 2a of the substrate 2 in the measurement region R. In addition, a metal having higher conductivity tends to have higher thermal conductivity. Therefore, when the conductive layer 4 is formed of a metal having high conductivity, the energy of laser light (energy beam) applied to the substrate 2 can be efficiently transmitted to the sample through the conductive layer 4. Therefore, a metal having high conductivity is preferably used as the material of the conductive layer 4.

From the above viewpoint, as the material of the conductive layer 4, for example, Pt, Au, or the like is preferably used. The conductive layer 4 is formed to be about 1 nm to 350 nm thick by, for example, plating, atom layer deposition (ALD: Atomic Layer Deposition), vapor deposition, sputtering, or the like. As a material of the conductive layer 4, for example, Cr (chromium), Ni (nickel), Ti (titanium), or the like may be used.

Next, a detailed configuration of the through hole 3a will be described with reference to FIG. 5. As shown in FIG. 5, the through hole 3a includes a narrow portion 3n having a width 3r (minimum width) smaller than the outer diameter Pr of the tip Pa of the pipette tip P. The pipette tip P is a device for dropping a sample solution containing a sample into the measurement region R. For example, the pipette tip P is a pipette tip for high throughput screening (HTS). That is, the pipette tip P is a pipette tip used by an apparatus that performs HTS. In the present embodiment, the through hole 3a is formed in a tubular shape (cylindrical shape in the present embodiment) having a width 3r smaller than the outer diameter Pr. That is, in the present embodiment, the narrow portion 3n is formed by the entire through hole 3a in the thickness direction D. The width 3r of the narrow portion 3n is 500 µm or less. In order to ensure that the sample solution reaches the first surface 2a, the width 3r of the narrow portion 3n is preferably 50 µm or more.

Although the conductive layer 4 is formed on the inner surface of the through hole 3a as described above, a hydrophilic coating layer C may be further provided on the conductive layer 4 as shown in FIG. 5. The coating layer C is formed of a material having higher hydrophilicity than the material of the inner surface of the through hole 3a (the conductive layer 4 in the present embodiment). The coating layer C is, for example, a layer formed by film formation of titanium oxide (TiO2) or zinc oxide (ZnO). The coating layer C may be formed by, for example, atom layer deposition method. The thickness of the coating layer C is, for example, 1 nm to 50 nm.

### [Mass spectrometry method using sample support 1A]

Next, a mass spectrometry method (including an ionization method) using the sample support 1A will be described with reference to FIGS. 6 to 8.

First, as shown in (A) of FIG. 6, the above-described sample support 1A is prepared (first step). The sample support 1A may be prepared by being manufactured by a person who performs the mass spectrometry method, or may be prepared by being acquired from a manufacturer, a seller, or the like of the sample support 1A.

Subsequently, as shown in (B) of FIG. 6, the sample support 1A is mounted on the mounting surface 8a of the glass slide 8 such that the second surface 2b of the substrate 2 faces the mounting surface 8a (second step). The glass slide 8 is a glass substrate on which a transparent conductive film such as an ITO (Indium Tin Oxide) film is formed, and the surface of the transparent conductive film is the mounting surface 8a. Note that the mounting portion is not limited to the glass slide 8, and a member capable of ensuring conductivity (for example, a substrate made of a metal material such as stainless steel) can be used as the mounting portion. In the present embodiment, the film cover F is removed from the sample support 1A, and the adhesive surface 51 of the portion 5c of the tape 5 is pressed against the mounting surface 8a, so that the sample support 1A is fixed to the glass slide 8.

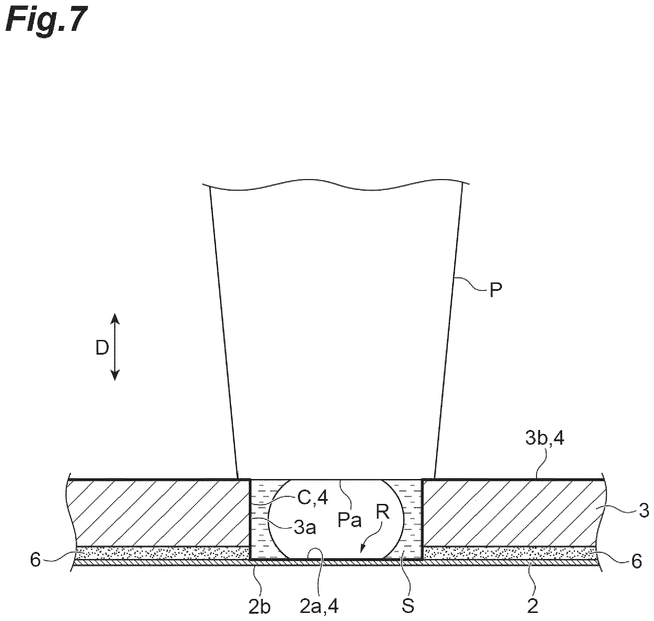

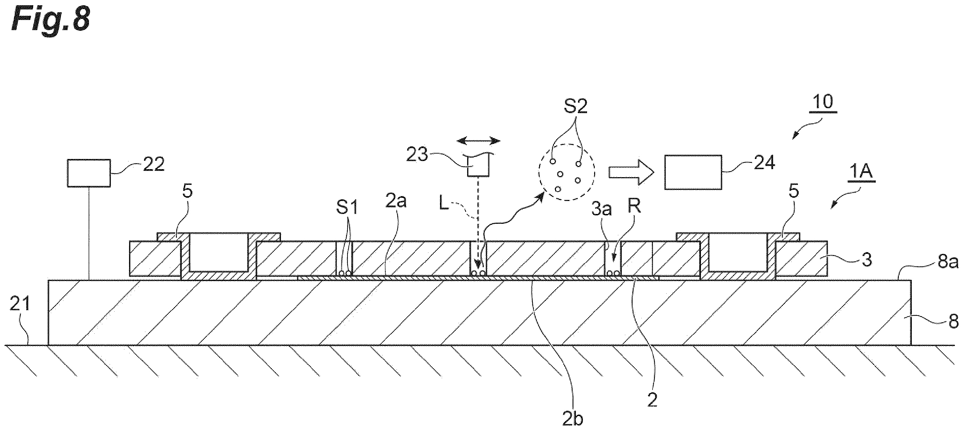

Subsequently, as shown in FIG. 7, in each measurement region R, the tip Pa of the pipette tip P is brought close to the through hole 3a from the surface 3b side (the side opposite to the first surface 2a side) of the frame 3. Specifically, the tip Pa of the pipette tip P is moved to a position where the tip Pa and the through hole 3a overlap when viewed from the thickness direction D and the tip Pa abuts on the surface 3b. Then, the sample solution S is dropped from the tip Pa of the pipette tip P into the measurement region R through the through hole 3a (third step). Thus, the sample solution S is introduced into the first surface 2a of the substrate 2 along the inner surface of the through hole 3a. Although a part of the sample solution S introduced into the first surface 2a penetrates into the through hole 2c and moves to the second surface 2b side, at least a part of the sample solution S remains on the first surface 2a side because the through hole 2c is a fine hole. When the sample solution S is dried, the component S1 of the sample remains on the first surface 2a side (see FIG. 8).

Subsequently, as shown in FIG. 8, the glass slide 8 and the sample support 1A are placed on the support unit 21 (for example, stage) of the mass spectrometer 20 in a state in which the sample support 1A in which the component S1 of the sample stays on the first surface 2a side is fixed to the glass slide 8. Subsequently, a voltage is applied to the frame 3 and the conductive layer 4 (see FIG. 3) of the sample support 1A through the mounting surface 8a of the glass slide 8 and the tape 5 by the voltage application unit 22 of the mass spectrometer 20. Subsequently, the first surface 2a of each measurement region R is irradiated with laser light L (energy beam) by the laser light irradiation unit 23 of the mass spectrometer 20 through the through hole 3a of the frame 3 (fourth step). That is, the laser light L is irradiated to a region (that is, the measurement region R) corresponding to the through hole 3a of the frame 3 in the first surface 2a of the substrate 2. In the present embodiment, the laser light irradiation unit 23 scans each measurement region R with the laser light L. The scanning of the laser light L for each measurement region R can be performed by operating at least one of the support unit 21 and the laser light irradiation unit 23.

In this manner, by irradiating the first surface 2a of the substrate 2 with the laser light L while applying a voltage to the conductive layer 4, the component S1 of the sample remaining in the through hole 2c of the substrate 2 (particularly, on the first surface 2a side) is ionized, and the sample ion S2 (ionized component SI) is discharged (fourth step). Specifically, the energy is transferred from the conductive layer 4 (see FIG. 3) that has absorbed the energy of the laser light L to the component S1 of the sample remaining in the through hole 2c, and the component S1 of the sample that has acquired the energy is vaporized and acquires an electric charge to become the sample ion S2. The first step to the fourth step described above correspond to an ionization method (laser desorption ionization method in the present embodiment) using the sample support 1A.

The released sample ion S2 moves while accelerating toward a ground electrode (not shown) provided between the sample support 1A and the ion detection unit 24 of the mass spectrometer 20. That is, the sample ion S2 moves toward the ground electrode while being accelerated by the potential difference generated between the conductive layer 4 to which the voltage is applied and the ground electrode. Then, the sample ion S2 is detected by the ion detection unit 24 (fifth step). In the present embodiment, the mass spectrometer 20 is a scanning mass spectrometer using time-of-flight mass spectrometry (TOF-MS). The first step to the fifth step described above correspond to the mass spectrometry method using the sample support 1A.

In the above ionization method, before the third step (i.e., before dropping the sample solution S), a step of performing surface treatment for improving hydrophilicity on the inner surface of the through hole 3a (in the present embodiment, the surface of the coating layer C provided on the conductive layer 4) may be further performed. For example, a surface treatment in which excimer irradiation or plasma irradiation is performed on the inner surface of the through hole 3a may be performed. Accordingly, in the third step, the sample solution S dropped from the tip Pa of the pipette tip P is easily transferred to the inner surface of the through hole 3a. As a result, the movement of the sample solution S to the first surface 2a side in the through hole 3a is promoted, and the sample solution S can be more smoothly moved to the first surface 2a.

### Effects of First Embodiment]

As described above, in the sample support 1A, the through hole 3a including the narrow portion 3n having the width 3r smaller than the outer diameter Pr of the tip Pa of the pipette tip P is formed in the portion of the frame 3 overlapping the measurement region R. Therefore, even if an operation of bringing the tip Pa of the pipette tip P close to the first surface 2a is performed in order to drop the sample solution S into the first surface 2a of the measurement region R, the tip Pa of the pipette tip P does not pass through the through hole 3a. That is, the narrow portion 3n of the through hole 3a reliably prevents the tip Pa of the pipette tip P from passing through the through hole 3a and contacting the first surface 2a of the measurement region R. Therefore, according to the sample support 1A, it is possible to prevent the substrate 2 from being damaged due to the contact between the substrate 2 and the pipette tip P.

The through hole 3a is formed in a tubular shape (cylindrical shape in the present embodiment) having a width 3r smaller than the outer diameter Pr of the tip Pa of the pipette tip P. Accordingly, the through hole 3a having a relatively simple shape can reliably prevent the tip Pa of the pipette tip P from contacting the first surface 2a of the measurement region R. In this case, the distance between the tip Pa of the pipette tip P and the first surface 2a (i.e., the distance in a state where the tip Pa and the first surface 2a are closest to each other) can be appropriately and easily defined by the length of the through hole 3a in the thickness direction D (i.e., the thickness of the frame 3).

The sample support 1A includes a conductive layer 4 provided so as not to block the through hole 2c in the first surface 2a. As a result, even when the insulating substrate 2 is used as in the present embodiment, a voltage can be applied to the first surface 2a side of the substrate 2 via the conductive layer 4. Thus, after the sample solution S is dropped into the first surface 2a and the sample solution S is dried, the first surface 2a is irradiated with the laser light L while applying a voltage to the conductive layer 4, whereby the component S1 of the sample can be favorably ionized.

The width of the through hole 2c is 1 nm to 700 nm, and the width 3r of the narrow portion 3n of the through hole 3a is 500 µm or less. By setting the width of the through hole 2c to the above range, the component S1 of the sample contained in the sample solution S dropped into the first surface 2a of the substrate 2 can be appropriately retained on the first surface 2a side of the substrate 2. Further, by setting the width 3r of the narrow portion 3n to 500 µm or less, the width 3r of the narrow portion 3n can be reliably made smaller than the outer diameter of the tip of a general pipette tip.

A plurality of (here, nine) measurement regions R are formed in the substrate 2, and a plurality of through holes 3a corresponding to the plurality of measurement regions R are formed in the frame 3. Accordingly, for example, by simultaneously operating a plurality of pipette tips P, it is possible to simultaneously drop a sample solution S (for example, a sample solution S having a different component or component ratio for each measurement region R) to a plurality of measurement regions R. As a result, the efficiency of measurement work can be improved. For example, by forming a number (for example, 1536) of measurement regions R suitable for the HTS application in the sample support 1A, it is possible to use the sample support in the HTS application (that is, to use the sample support in an apparatus that performs HTS).

A hydrophilic coating layer C is provided on the inner surface of the through hole 3a. As a result, the sample solution S dropped from the tip Pa of the pipette tip P is easily transferred to the inner surface of the through hole 3a. As a result, the movement of the sample solution S to the first surface 2a side in the through hole 3a is promoted, and the sample solution S can be moved to the first surface 2a more smoothly.

In addition, in the ionization method (first step to fourth step) and the mass spectrometry method (first step to fifth step) using the sample support 1A, even if an operation of bringing the tip Pa of the pipette tip P close to the first surface 2a is performed in order to drop the sample solution S into the first surface 2a of the measurement region R in the third step in which the sample solution S is dropped, the tip Pa of the pipette tip P does not pass through the through hole 3a. That is, the narrow portion 3n of the through hole 3a reliably prevents the tip Pa of the pipette tip P from passing through the through hole 3a and contacting the first surface 2a of the measurement region R. Accordingly, it is possible to prevent the substrate 2 from being damaged due to the contact between the substrate 2 and the pipette tip P.

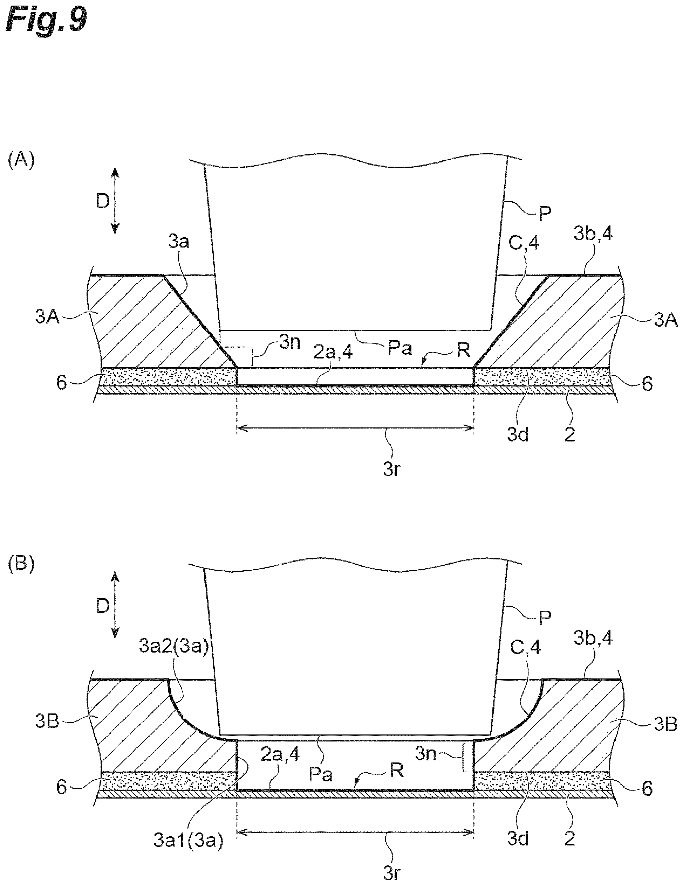

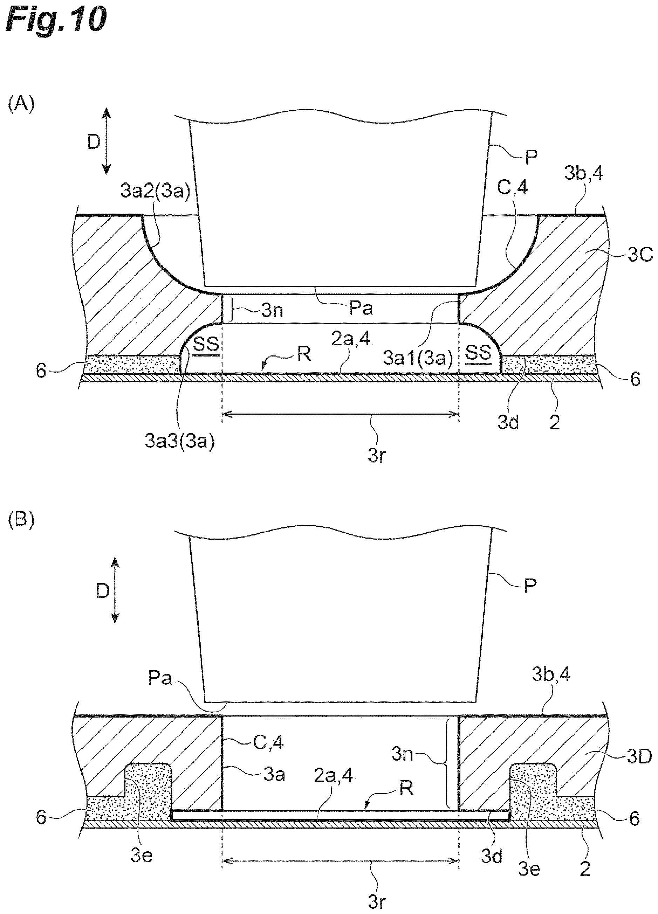

Next, a modification of the frame 3 will be described with reference to FIGS. 9 and 10. In FIGS. 9 and 10, a portion where the conductive layer 4 is formed is indicated by a thick line.

### [First Modification of Frame 3]

With reference to (A) of FIG. 9, a first modification (frame 3A) of frame 3 will be described. The frame 3A is different from the frame 3 in the following points. That is, in the frame 3A, the through hole 3a is formed in a tapered shape in which the inner diameter decreases toward the first surface 2a along the thickness direction D. For example, the through hole 3a is formed in a truncated conical shape whose diameter decreases from the surface 3b side of the frame 3A toward the surface 3d side of the frame 3A on the substrate 2 side. In the frame 3A, when viewed from the thickness direction D, the opening of the through hole 3a on the surface 3b side (the side opposite to the first surface 2a side) has a size including the tip Pa of the pipette tip P. The opening diameter of the through hole 3a on the surface 3b side in the frame 3A is, for example, about 0.5 mm to 5.0 mm. That is, the opening diameter of the through hole 3a on the surface 3b side is larger than the outer diameter Pr of the tip Pa. On the other hand, a narrow portion 3n (i.e., a portion having a width smaller than the outer diameter Pr) is formed by a portion including an opening on the surface 3d side of the through hole 3a. The opening diameter of the through hole 3a on the surface 3d side is the minimum width (width 3r) in the narrow portion 3n.

According to the frame 3A, the tip Pa of the pipette tip P can be easily introduced into the through hole 3a. That is, since the opening diameter of the through hole 3a on the surface 3b side is larger than the outer diameter Pr of the tip Pa, even if the position of the tip Pa of the pipette tip P is slightly shifted in the direction orthogonal to the thickness direction D, the tip Pa of the pipette tip P can be guided into the through hole 3a. Further, according to the frame 3A, the tip Pa of the pipette tip P can be brought closer to the first surface 2a of the measurement region R as compared with the frame 3. That is, in the frame 3, the tip Pa of the pipette tip P can be brought close to the first surface 2a only up to the position where the tip Pa abuts on the surface 2b, whereas in the frame 3A, the tip Pa of the pipette tip P can be brought close to the first surface 2a up to the upper end position of the narrow portion 3n (position below the surface 2b). This makes it possible to suitably drop the sample solution S into the measurement region R.

### [Second Modification of Frame 3]

With reference to (B) of FIG. 9, a second modification (frame 3B) of frame 3 will be described. The frame 3B is different from the frame 3 in the following points. That is, in the frame 3B, the through hole 3a has a cylindrical portion 3a1 and a bowl-shaped portion 3a2. The cylindrical portion 3a1 is provided on the surface 3d side of the through hole 3a, and the bowl-shaped portion 3a2 is provided on the surface 3b side of the through hole 3a.

The cylindrical portion 3a1 is a portion having a width 3r smaller than the outer diameter Pr of the tip Pa of the pipette tip P. In the present embodiment, the cylindrical portion 3a1 is formed in a cylindrical shape, and the narrow portion 3n is constituted by the entire region of the cylindrical portion 3a1 in the thickness direction D.

The bowl-shaped portion 3a2 is connected to the end portion of the cylindrical portion 3a1 opposite to the first surface 2a side. The bowl-shaped portion 3a2 is a portion in which the inner diameter increases in a bowl shape (curved surface shape) as it goes away from the first surface 2a along the thickness direction D. When viewed from the thickness direction D, the opening of the bowl-shaped portion 3a2 on the side opposite to the cylindrical portion 3a1 (that is, the opening of the through hole 3a on the surface 3b side) has a size including the tip Pa of the pipette tip P. That is, the opening diameter of the through hole 3a on the surface 3b side is larger than the outer diameter Pr of the tip Pa. In the frame 3B, the opening diameter of the through hole 3a on the surface 3b side is, for example, about 0.5 mm to 5.0 mm.

According to the frame 3B, like the frame 3A, the tip Pa of the pipette tip P can be easily introduced into the through hole 3a. That is, even if the position of the tip Pa of the pipette tip P is slightly shifted in the direction orthogonal to the thickness direction D, the tip Pa of the pipette tip P can be introduced into the through hole 3a (specifically, into the bowl-shaped portion 3a2). Further, the tip Pa of the pipette tip P can be brought closer to the first surface 2a of the measurement region R. Specifically, in the frame 3B, the tip Pa of the pipette tip P can be brought close to the first surface 2a to the upper end position (position below the surface 2b) of the cylindrical portion 3a1. This makes it possible to suitably drop the sample solution S into the measurement region R. Further, the through hole 3a (i.e., the cylindrical portion 3a1 and the bowl-shaped portion 3a2) can be formed by relatively easy processing such as etching.

### [Third Modification of Frame 3]

A third modification (frame 3C) of the frame 3 will be described with reference to (A) of FIG. 10. The frame 3C is different from the frame 3B in the following points. That is, in the frame 3C, the through hole 3a further includes an inner bowl-shaped portion 3a3 in addition to the cylindrical portion 3a1 and the bowl-shaped portion 3a2. The inner bowl-shaped portion 3a3 is connected to an end portion of the cylindrical portion 3a1 on the first surface 2a side. That is, the inner bowl-shaped portion 3a3 is formed between the cylindrical portion 3a1 and the adhesive layer 6. The inner bowl-shaped portion 3a3 is a portion having an inner diameter increasing in a bowl shape (curved surface shape) toward the first surface 2a along the thickness direction D. That is, when viewed from the thickness direction D, the opening of the inner bowl-shaped portion 3a3 on the first surface 2a side is larger than the opening of the cylindrical portion 3a1 (i.e., width 3r). When the frame 3C is used, a region of the first surface 2a of the substrate 2 located inside the cylindrical portion 3a1 when viewed from the thickness direction D functions as the measurement region R. A surplus space SS is formed between the adhesive layer 6 and the measurement region R by the inner bowl-shaped portion 3a3. The surplus space SS is a space located outside the cylindrical portion 3a1 when viewed from the thickness direction D. The frame 3C can be formed, for example, by joining surfaces 3d of two frames 3B (which may differ in thickness, dimensions of the bowl-shaped portion 3a2 (etching depth, etc.), etc.).

According to the frame 3C, the same effects as those of the above-described frame 3B are exhibited, and the following effects are exhibited. That is, according to the frame 3C, the area of the first surface 2a exposed to the through hole 3a can be increased as compared with the case where the through hole 3a does not have the inner bowl-shaped portion 3a3. Accordingly, in the case where the frame 3C and the first surface 2a of the substrate 2 are bonded to each other with an adhesive (adhesive layer 6) as in the present embodiment, even if the adhesive slightly drips to the measurement region R side, the ionization of the sample using the measurement region R can be performed without any problem. Specifically, since the surplus space SS described above is formed, the adhesive dripping from the end portion of the adhesive layer 6 does not immediately enter the measurement region R. As described above, according to the frame 3C, it is possible to suppress the liquid dripping from the adhesive layer 6 from affecting the measurement using the measurement region R.

When the frame 3C is used, it is necessary to continuously form the conductive layer 4 on the inner surface of the inner bowl-shaped portion 3a3 surrounding the surplus space SS, the surface of the adhesive layer 6, and the first surface 2a so that the conductive layer 4 provided on the surface 3b of the frame 3C is electrically connected to the conductive layer 4 provided on the first surface 2a of the measurement region R. Therefore, when the frame 3C is used, the conductive layer 4 may be formed by atom layer deposition (ALD).

### [Fourth Modification of Frame 3]

With reference to (B) of FIG. 10, a fourth modification (frame 3D) of frame 3 will be described. The frame 3D is different from the frame 3 in the following points. That is, in the frame 3D, a recessed portion 3e in which a part of the adhesive layer 6 is accommodated is formed on a surface (surface 3d) which is in a vicinity of the through hole 3a (here, as an example, a cylindrical through hole similar to the frame 3) and faces the adhesive layer 6.

According to the frame 3D, in the vicinity of the through hole 3a, that is, in the peripheral portion of the measurement region R, the adhesive constituting the adhesive layer 6 can be released to the recessed portion 3e. That is, even if there is an excess adhesive in the vicinity of the through hole 3a, the excess adhesive can be released to the recessed portion 3e. As a result, the adhesive can be prevented from dripping to the measurement region R side. As a result, sample ionization using the measurement region R can be suitably performed.

When the frame 3d is used, a clearance may be formed between the surface 3d of the frame 3D and the first surface 2a in the vicinity of the through hole 3a as shown in (B) of FIG. 10 due to the escape of the adhesive to the recessed portion 3e. Further, in order to electrically connect the conductive layer 4 provided on the surface 3b of the frame 3D and the conductive layer 4 provided on the first surface 2a of the measurement region R, it is necessary to continuously form the conductive layer 4 on the surface 3d surrounding the gaps, the surface of the adhesive layer 6, and the first surface 2a. Therefore, when the frame 3D is used, the conductive layer 4 may be formed by atom layer deposition (ALD) as in the case of using the frame 3C.

### [EXAMPLE]

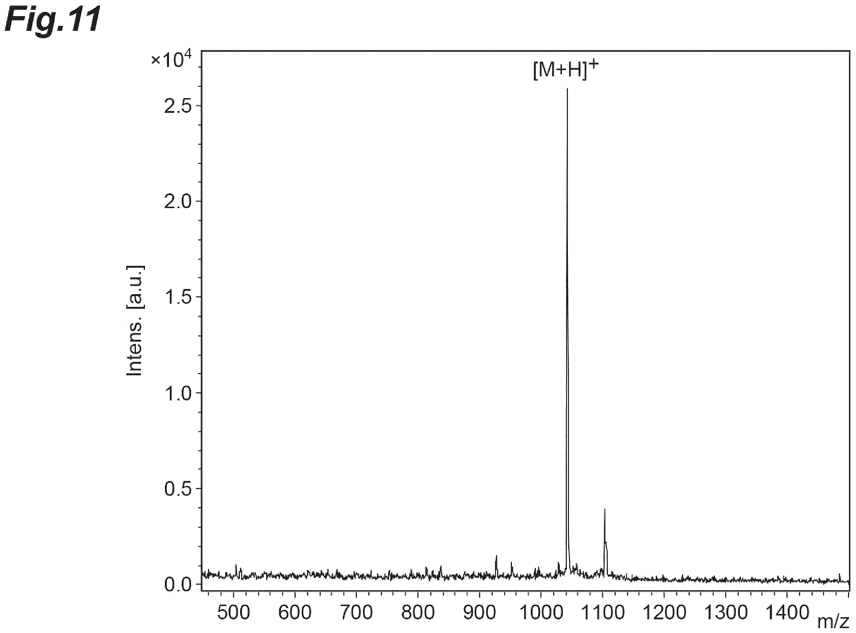

FIG. 11 shows a mass spectrometry result (measurement result) using the sample support according to the example. The sample support according to the embodiment is a sample support having the same configuration as the sample support 1A having the frame 3B of the second modification example (see (B) of FIG. 9). In the sample support according to the example, the thickness (length in the thickness direction D) of the cylindrical portion 3a1 is 0.04 mm to 0.06 mm, the diameter (i.e., width 3r) of the cylindrical portion 3a1 is 0.5 mm, the opening diameter of the bowl-shaped portion 3a2 on the surface 3b side is 1.5 mm, and the thickness of the frame 3B is 0.2 mm. The sample solution to be measured was a mixture of AngiotensinII (10 µM) [m/z 1046.5], citric acid (5 mg/mL), and diammonium hydrogen citrate (5 mg/mL) at a ratio of 2:1:1. In this example, 1 µL of the sample solution was dropped into one measurement region R of the sample support using a pipette tip P (third step of the mass spectrometry method described above). After the dropped sample solution was dried, the fourth step and the fifth step of the mass spectrometry method were performed. As a result, as shown in FIG. 11, proton-added AngiotensinII ([M+H]⁺ in FIG. 11) was appropriately detected.

### [Second Embodiment]

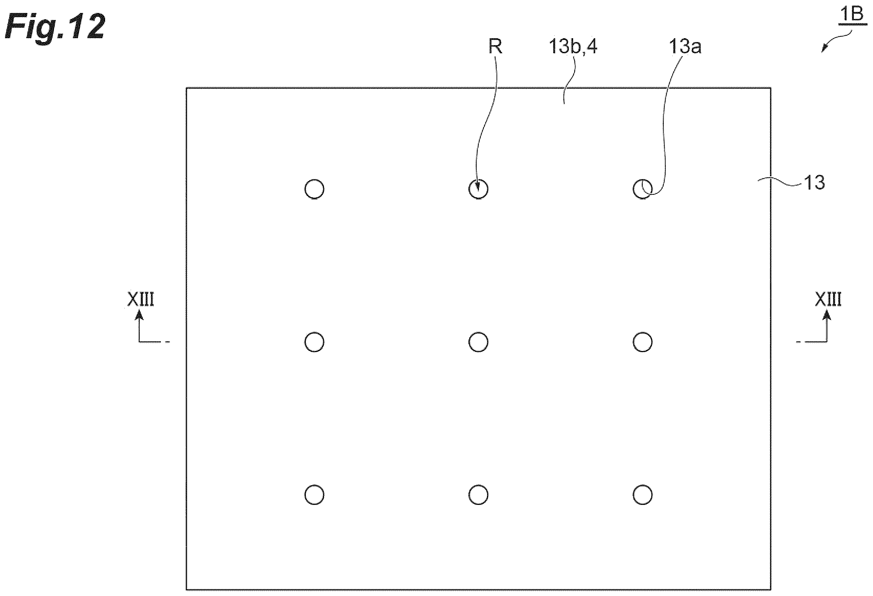

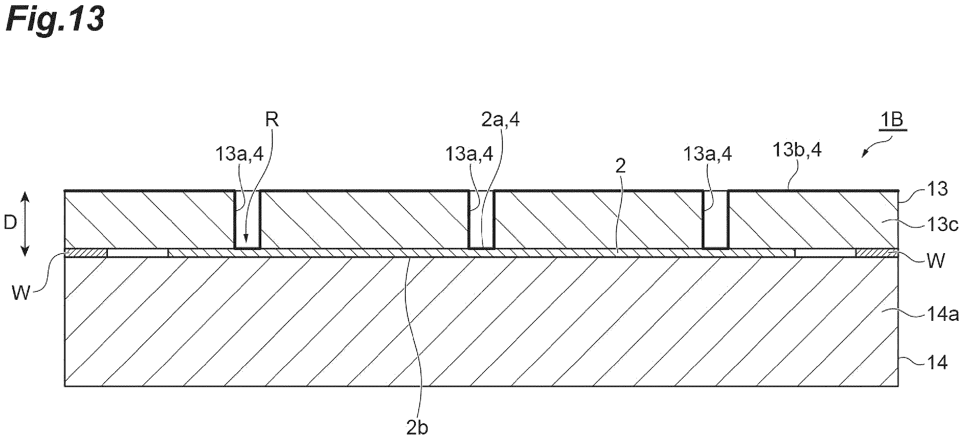

A sample support 1B according to the second embodiment will be described with reference to FIGS. 12 and 13. The sample support IB is different from the sample support 1A mainly in that a frame 13 is provided instead of the frame 3 and a magnetic substrate 14 provided on the second surface 2b of the substrate 2 is further provided.

Like the frame 3, the frame 13 is formed in a rectangular plate shape. The frame 13 is made of a magnetic material. For example, the frame 13 is formed of Kovar or an alloy such as 42 alloy. The length of one side of the frame 13 when viewed from the thickness direction D is, for example, about several cm to 200 cm, and the thickness of the frame 13 is, for example, 3 mm or less. In the present embodiment, as an example, the thickness of the frame 13 is about 0.1 mm to 0.2 mm. Like the frame 3, the frame 13 is bonded to the first surface 2a of the substrate 2 by the adhesive layer 6 (see FIG. 3). A through hole 13a similar to the through hole 3a of the frame 3 is formed in the frame 13. That is, each measurement region R in the substrate 2 is defined by each of the plurality of (here, nine) through holes 13a. As shown in FIGS. 12 and 13, the conductive layer 4 is continuously (integrally) formed on a region of the first surface 2a of the substrate 2 corresponding to the through hole 13a of the frame 13 (that is, a region corresponding to the measurement region R), an inner surface of the through hole 13a, and the surface 13b of the frame 13. In FIG. 13, a portion where the conductive layer 4 is formed is indicated by a thick line.

The magnetic substrate 14 is formed of a magnetic material. For example, the magnetic substrate 14 is formed in a rectangular plate shape by a stainless steel material (SUS 430 or the like) or the like. The thickness of the magnetic substrate 14 is, for example, about 1 mm. When viewed from the thickness direction D, both the frame 13 and the magnetic substrate 14 are formed in a rectangular plate shape larger than the substrate 2.

The frame 13 and the magnetic substrate 14 are both formed of a magnetic material and are configured to attract each other by magnetic force. The substrate 2 is sandwiched between the frame 13 and the magnetic substrate 14 that attract each other. That is, the magnetic substrate 14 is fixed to the second surface 2b of the substrate 14 by the magnetic force between the frame 13 and the magnetic substrate 2. As described above, the magnetic substrate 14 is fixed to the second surface 2b of the substrate 2 by the magnetic force, and is not bonded to the second surface 2b by an adhesive or the like.

The peripheral portion 13c of the frame 13 and the peripheral portion 14a of the magnetic substrate 14, which do not overlap the substrate 2 when viewed from the thickness direction D, are joined to each other. The peripheral portion 13c of the frame 13 and the peripheral portion 14a of the magnetic substrate 14 are, for example, welded. Thus, a rectangular annular welded part W is formed between the peripheral portion 13c and the peripheral portion 14a when viewed from the thickness direction D.

### [Effects of Second Embodiment]

The same effects as those of the above-described sample support 1A are also achieved by the above-described sample support IB. That is, in the sample support 1B, a through hole 13a including a narrow portion having a width smaller than the outer diameter Pr of the tip Pa of the pipette tip P (that is, a through hole having a narrow portion 13n similar to the through hole 3a) is formed in a portion overlapping the measurement region R in the frame 13. Therefore, even if an operation of bringing the tip Pa of the pipette tip P close to the first surface 2a is performed in order to drop the sample solution S into the first surface 2a of the measurement region R, the tip Pa of the pipette tip P does not pass through the through hole 13a. That is, the narrow portion of the through hole 13a reliably prevents the tip Pa of the pipette tip P from penetrating the through hole 13a and contacting the first surface 2a of the measurement region R. Therefore, according to the sample support 1B, it is possible to prevent the substrate 2 from being damaged due to the contact between the substrate 2 and the pipette tip P.

The sample support IB further includes a magnetic substrate 14 formed of a magnetic material and provided on the second surface 2b of the substrate 2. Accordingly, for example, when the sample support IB is fixed in order to drop the sample solution into the sample support 1B, the magnetic substrate 14 can be appropriately fixed to the mounting portion by the magnetic force acting between the magnetic substrate 14 and the mounting portion by using the mounting portion having magnetism. Accordingly, a fixing member such as a tape for fixing the sample support IB to the mounting portion can be omitted.

The frame 13 is made of a magnetic material. The magnetic substrate 14 is fixed to the second surface 2b of the substrate 14 by the magnetic force between the frame 13 and the magnetic substrate 2. If the magnetic substrate 14 is bonded to the second surface 2b of the substrate 2 with an adhesive, not only the sample to be measured but also a component of the adhesive provided on the second surface 2b of the measurement region R is ionized at the time of measurement (ionization of the sample dropped on the measurement region R), and there is a concern that the measurement cannot be appropriately performed. On the other hand, according to the sample support 1B, the above-described problem can be solved, and the magnetic substrate 14 can be easily fixed to the substrate 2.

The peripheral portion 13c of the frame 13 and the peripheral portion 14a of the magnetic substrate 14, which do not overlap the substrate 2 when viewed from the thickness direction D, are welded (joined) to each other. Accordingly, the frame 13 provided on the first surface 2a side of the substrate 2 and the magnetic substrate 14 provided on the second surface 2b side of the substrate 2 can be appropriately fixed.

In the second embodiment described above, the through hole 13a of the frame 13 has the same shape as the through hole 3a of the frame 3 of the first embodiment, but the through hole 13a of the frame 13 may have the same shape as the through hole 3a of the frames 3A, 3B, 3C, and 3D according to the modifications of the first embodiment described above.

Although an embodiment of the present disclosure has been described above, the present disclosure is not limited to the above-described embodiment. For example, the material and shape of each component are not limited to those described above, and various materials and shapes can be adopted.

For example, in the above embodiment, a plurality of (nine as an example) measurement regions R are defined by the plurality of through holes 3a and 13a provided in the frames 3, 3A, 3B, 3C, 3D, and 13, but only one measurement region R may be provided.

The conductive layer 4 provided on the substrate 2 may be provided at least on the first surface 2a. Therefore, the conductive layer 4 may be provided on, for example, the second surface 2b in addition to the first surface 2a, or may be provided on the whole or a part of the inner surface of each through hole 2c.

The substrate 2 may have conductivity. For example, the substrate 2 may be formed of a conductive material such as a semiconductor. In this case, the conductive layer 4 for applying a voltage to the first surface 2a side of the substrate 2 may be omitted. However, even when substrate 2 has conductivity, conductive layer 4 may be provided to suitably apply a voltage to the first surface 2a side of substrate 2.

Although the sample support 1A includes the tape 5 for fixing the sample support 1A to the glass slide 8, the sample support 1A may not include the tape 5. In this case, the opening part 3c of the frame 3 may also be omitted. In this case, in the second step of the mass spectrometry method using the sample support 1A described above, the sample support 1A may be fixed to the glass slide 8 by a tape prepared separately from the sample support 1A or a means other than the tape (for example, a means using an adhesive, a fixing tool, or the like).

In the above embodiment, the hydrophilic coating layer C is provided on the inner surface of the through hole 3a, but the coating layer C may be omitted if the sample solution S can be sufficiently guided to the first surface 2a without the coating layer C.

In the fourth step of the mass spectrometry method, the object to which the voltage is applied by the voltage application unit 22 is not limited to the mounting surface 8a. For example, the voltage may be directly applied to the frame 3 or the conductive layer 4. In this case, the glass slide 8 (or the mounting portion 8A) and the tape 5 may not have conductivity.

In the fourth step of the mass spectrometry method, the laser light irradiation unit 23 may irradiate the measurement region R with the laser light L at once. That is, the mass spectrometer 20 may be a projection mass spectrometer. The ionization method described above can also be used for other measurements and experiments such as ion mobility measurement.

Further, the use of the sample supports 1A and IB is not limited to the ionization of the sample by the irradiation of the laser light L. The sample supports 1A and IB can be used for sample ionization by irradiation with energy beams such as laser light, ion beams, and electronic beams. In the above-described ionization method and mass spectrometry method, the sample can be ionized by irradiation with an energy beam.

### Reference Signs List

1A, IB sample support
2 substrate
2a first surface
2b second surface
2c through hole (first through hole)
3, 3A, 3B, 3C, 3D, 13 frame
3a, 13a through hole (second through hole)
3a1 cylindrical portion
3a2 bowl-shaped portion
3a3 inner bowl-shaped portion
3n narrow portion
3r width
4 conductive layer
8 glass slide (mounting portion)
8a mounting surface
14 magnetic substrate
C coating layer
D thickness direction
P pipette tip
Pa tip
Pr outer diameter,
R measurement region
S sample solution
S1 component.

## Claims

1. A sample support for ionization of a sample contained in a sample solution dropped using a pipette tip, the sample support comprising:
a substrate having a first surface and a second surface opposite to the first surface, the substrate having a plurality of first through holes opened in the first surface and the second surface;
a frame having a second through hole penetrating in a thickness direction of the substrate so as to overlap a measurement region of the substrate for ionizing a component of the sample when viewed from the thickness direction, the frame being bonded to the first surface of the substrate,
wherein the second through hole includes a narrow portion having a width smaller than an outer diameter of a tip of the pipette tip.

2. The sample support according to claim 1, wherein the second through hole is formed in a cylindrical shape having a width smaller than the outer diameter.

3. The sample support according to claim 1, wherein the second through hole is formed in a tapered shape in which an inner diameter decreases toward the first surface along the thickness direction, and
when viewed from the thickness direction, an opening of the second through hole on a side opposite to the first surface side has a size including the tip of the pipette tip.

4. The sample support according to claim 1, wherein
the second through hole includes:
a cylindrical portion including the narrow portion; and
a bowl-shaped portion connected to an end portion of the cylindrical portion opposite to the first surface side and having an inner diameter increasing with distance from the first surface along the thickness direction,
wherein an opening of the bowl-shaped portion opposite to the cylindrical portion has a size including the tip of the pipette tip when viewed from the thickness direction.

5. The sample support according to claim 4, wherein the second through hole further includes an inner bowl-shaped portion connected to an end portion of the cylindrical portion on the first surface side and having an inner diameter increasing toward the first surface along the thickness direction.

6. The sample support according to any one of claims 1 to 5, further comprising an adhesive layer disposed between the frame and the first surface to adhere the frame to the first surface,
wherein the frame is formed with a recessed portion in which a portion of the adhesive layer is accommodated on a surface of the frame facing the adhesive layer in a vicinity of the second through hole.

7. The sample support according to any one of claims 1 to 6, further comprising a magnetic substrate formed of a magnetic material and provided on the second surface of the substrate.

8. The sample support according to claim 7, wherein the frame is formed of a magnetic material, and
the magnetic substrate is fixed to the second surface of the substrate by a magnetic force between the frame and the magnetic substrate.

9. The sample support according to claim 7, wherein a peripheral portion of the frame and a peripheral portion of the magnetic substrate, which do not overlap the substrate when viewed from the thickness direction, are bonded to each other.

10. The sample support according to any one of claims 1 to 9, further comprising a conductive layer provided on the first surface so as not to block the first through hole.

11. The sample support according to any one of claims 1 to 10, wherein a width of the first through hole is 1 nm to 700 nm, and a width of the narrow portion of the second through hole is 500 µm or less.

12. The sample support according to any one of claims 1 to 11, wherein a plurality of the measurement regions are formed in the substrate, and
the frame has a plurality of second through holes corresponding to the plurality of measurement regions.

13. The sample support according to any one of claims 1 to 12, wherein a hydrophilic coating layer is provided on an inner surface of the second through hole.

14. An ionization method including:
a first step of preparing the sample support according to any one of claims 1 to 13;
a second step of placing the sample support on a mounting surface of a mounting portion such that the second surface faces the mounting surface;
a third step of bringing the tip of the pipette tip close to the second through hole from a side opposite to the first surface side of the frame and then dropping the sample solution from the tip of the pipette tip into the measurement region through the second through hole; and
a fourth step of ionizing a component of the sample by irradiating the first surface of the measurement region with an energy beam after the sample solution dropped on the substrate is dried.

15. The ionization method according to claim 14, further including a step of performing a surface treatment for improving hydrophilicity on an inner surface of the second through hole before the third step.

16. A mass spectrometry method including:
each step of the ionization method according to claim 14 or 15; and
a fifth step of detecting the component ionized in the fourth step.
